# Europäisches Patentamt

# European Patent Office

# Office européen des brevets

(11) Numéro de publication: **0 413 821 A1**

(12)
# DEMANDE DE BREVET EUROPEEN PUBLI E EN APPLICATION DE
## L'article 158, paragraphe 3 de la CBE

(21) Numéro de dépôt: **89907878.6**

(22) Date de dépôt: **28.02.89**

(86) Numéro de dépôt internationale :
**PCT/SU89/00053**

(87) Numéro de publication internationale :
**WO 90/09861 (07.09.90 90/21)**

(51) Int. Cl.⁵: **B23K 11/04**

(43) Date de publication de la demande:
**27.02.91 Bulletin 91/09**

(84) Etats contractants désignés:
**AT CH DE FR LI SE**

(71) Demandeur: **INSTITUT ELEKTROSVARKI IMENI E.O.PATONA AKADEMII NAUK UKRAINSKOI SSR**
**ul. Bozhenko, 11**
**Kiev, 252650(SU)**

(72) Inventeur: **KUCHUK-YATSENKO, Sergei Ivanovich**
**pr. 40-letia Oktyabrya, 21-93**
**Kiev, 252039(SU)**
Inventeur: **BOGORSKY, Mikhail Vladimirovich**

**ul. Ozernaya, 30-120**
**Kiev, 252209(SU)**
Inventeur: **BELYAEV, Daniil Ivanovich**
**ul. Cheshskaya, 4-141**
**Kiev, 252042(SU)**
Inventeur: **BONDARUK, Andrei Vsevolodovich**
**bulvar Koltsova, 17g-26**
**Kiev, 252194(SU)**
Inventeur: **GORONKOV, Nikolai Dmitrievich**
**ul. Chelyabinskaya, 11-38**
**Kiev, 252097(SU)**

(74) Mandataire: **Rodhain, Claude**
**Cabinet Claude Rodhain 30, rue la Boétie**
**F-75008 Paris(FR)**

(54) **PROCEDE DE SOUDAGE EN CONTACT PAR ETINCELAGE BOUT-A-BOUT D'UNE PAIRE DE PIECES.**

(57) A method of flash-butt contact welding of a pair of parts provides for partial melting of the parts (1, 2) to be welded and their clamping together. During partial melting, the parts (1,2) are stopped at the moments when the weld current reaches a predetermined current stopping value and the parts (1,2) are brought into oscillating movement. As the weld current decreases during the stoppage of the parts (1, 2) their oscillating movement is discontinued and their mutual clamping is resumed.

EP 0 413 821 A1

# PROCEDE DE SOUDAGE PAR RESISTANCE EN BOUT APPROCHES SUCCESSIVES D'UNE PAIRE DE PIECES

## Domaine de l'invention

L'invention concerne le soudage, notamment, les procédés de soudage par résistance en bout par approches successives d'une paire de pièces, de préférence, de pièces ayant des diamètres de soudage élevés.

La stabilité de l'étincelage lors du soudage par résistance en bout est déterminée par l'absence d'interruptions de circulation de courant de soudage dans les pièces à souder, ainsi que par l'absence ce court-circuits des faces en bout à fusionner des pièces. Ces conditions étant respectées, l'efficacité de chauffage des pièces à souder lors de l'étincelage et la cadence du soudage seront assez élevés.

## Etat de la technique

On connaît un procédé de soudage par résistance en bout par apprôches succéssives d'une paire de pièces (S.I.Kuchuc -Yatsenko, "Soudage par résistance en bout par étincelage en continu", 1976, Naukova dumka (Kiev), p.p. 105 à 117), consistant en ce que les pièces à souder sont soumises à l'étincelage suivi de refoulement et pendant l'étincelage de la paire de pièces à souder, la vitesse de leur déplacement rectiligne croît pour un court delai par rapport à sa valeur moyenne prédéterminée lors de l'étincelage. Un tel étincelage permet d'intensifier le chauffage du métal d'une paire de pièces à souder grâce à la diminution des pertes d'énergie ayant lieu lors de la projection de métal liquide an moment de la déterioration mécanique des points de contact pendant leur chauffage, ainsi que de réduire considérablement la puissance électrique consommée.

Toutefois, aux moments de croîssance de l'interstice d'étincelage, pendant un tel étincelage, l'intensité de fusion par étincelage décroît et les oscillogrammes témoignent l'interruptions de courte durée du courant de soudage. On connaît que lors d'un soudage par résistance par étincelage de telles interruptions, surtour aux moments précédents au réfoulement, sont inadmissibles car elles sont nuisibles à la qualité des soudures obtenues.

On connaît un procédé de soudage par résistance en bout par approches succéssives d'une paire de pièces (SU, A, 903026) consistant en ce que les pièces à souder sont montées dans une machine à souder avec possibilité d'un mouvement de va-et-vient, qu'on prédétermine la voleur de courant de soudage d'arrêt à l'atteinte de laquelle on cesse de déplacer les pièces à souder qu'on prédétermine la valeur de courant de soudage de reprise de déplacement de translation, à laquelle on fait les pièces reprendre le déplacement, après l'arrêt, on applique la tension de soudage aux pièces à souder pour réaliser l'étincelage lors de leur mouvement de translation réciproque, on mesure la valeur courante du courant de soudage lors de l'étincelage de la paire de pièces à souder, on effectue l'arrêt de la paire de pièces à souder lorsque la valeur courante de courant de soudage atteint la valeur de consigne de courant de soudage d'arrêt, on fait les pièces à souder reprendre leur mouvement de va-et-vient lorsque la valeur courante de courant de soudage se réduit jusqu' à la valeur de consigne de courant de soudage de reprise du mouvement, on effectue le refoulement des pièces à souder après leur échauffement requis.

Par comparaison avec les procédés classiques ce procédé connu augmente dans une certaine mesure les performances éenergétiques de l'étincelage et sa stabilité, or, après l'arrêt de la paire de pièces à souder, l'étincelage en présence de courants correspondant à l'extrémum de la puissance électrique a lieu pendant un temps très court. En cas de l'utilisation du procédé servant d'antériorité la plus proche de la présente invention, après l'arrêt de la paire de pièces à souder, le dégagement de la chaleur utile dans la zone de soudage correspond à l'éxtrémum de la puissance électrique se dégageant dans le joint, et dans ce cas, la valeur de courant de soudage lors de l'arrêt de la paire de pièces à souder correspond à une certaine valeur fixe de conductibilité électrique de l'interstice, d'étincelage entre les pièces à souder. A cause d'un caractère explosif de l'étincelage sous l'action du courant de soudage passant par les points de contact, il se produit un suréchauffement du métal des points de contact et la projection rapide du métal fondu hors de la zone de soudage. La conductibilité électrique de l'interstice d'étincelage tombe nettement, et par conséquence, se réduit aussi, dans la même mesure, le courant de soudage passant par les pièces à souder, cette réduction se produisant par bond. C'est-à-dire que le système sort brusquement de l'état correspondant à l'extrémum de puissance électrique, il s'en suit que l'étincelage a lieu lorsque l'efficacité de rechauffement des faces extrèmes des pièces n'est pas maximale possible. De cette façon, le procédé connu ne permet, donc, pas de stabiliser la valeur courant du courant de soudage dans le domaine du point d'extrémum de la courbe de puissance utile se dégageant dans l'interstice.

## Exposé de l'invention

L'invention vise à fournir un tel procédé de soudage par résistance en bout par approches successives d'une paire de pièces qui permettrait de stabiliser la valeur courante du courant de soudage dans l'environnement du point d'extrémum de la courbe de la puissance utile dégagée dans le joint ce qui mène à l'augmentation de performances energétiques de l'étincelage et, comme résultat, à la réduction de la durée de soudage.

Le problème posé est résolu du fait que dans un procédé de soudage par résistance en bout par approches successives d'une paire de pièces consistant en ce qu'on met une paire de pièces à souder dans une machine à souder avec possibilité d'un mouvement de va-et-vient, on prédétermine la valeur de consigne de courant de soudage d'arrêt à l'atteinte de laquelle on effectue l'arrêt de la paire de pièces à souder, on prédétermine la valeur de consigne de courant de soudage de reprise du déplacement en présence de laquelle on fait les pièces reprendre leur mouvement de translation après leur arrêt, on applique aux pièces à souder une tension de soudage pour effectuer l'étincelage lors de leur mouvement de translation réciproque, on mesure la valeur courante du courant de soudage lors de l'étincelage de la paire de pièces à souder, on effectue l'arrêt de la paire de pièces à souder lorsque la valeur courante mesurée du courant de soudage atteint la consigne de courant de soudage d'arrêt, on fait la paire de pièces à souder reprendre leur mouvement de translation réciproque lorsque la valeur courante du courant de soudage diminue jusqu'à la valeur de consigne de reprise du mouvement, on effectue le refoulement de la paire de pièces à aouder après avoir les porter à la température requise, selon l'invention, pendant l'intervalle d'arrêt des pièces à souder on leur communique des déplacements oscillatoires à une fréquence d'oscillations se situant dans les limites de 10 à 50 Hz.

Dans le procédé de soudage par résistance en bout par approches successives, il est avantageux de communiquer les déplacements oscillatoires avec amplitudes identiques aux approches comme aux écartements des pièces à souder.

Dans le procédé de soudage par résistance en bout par approches succéssives, il est aussi avantageux, lors des déplacements oscillatoires d'une paire de pièces à souder, de maintenir la valeur courante de courant de soudage dans les limites de 0,8 à 1,2 fois le courant de soudage d'arrêt.

Il est préférable, lors du soudage par résistance en bout par approches successives de commencer les oscillations de la paire de pièces à souder par leur écartement.

L'invention permet d'augmenter la capacité du matériel de soudage grâce à l'augmentation de sa cadence, d'élargir la gamme d'utilisation du matériel du côté des pièces à souder à sections transversales élevées.

## Brève déscription de dessins

Dans ce qui suit, l'invention est élucidée à l'aide d'exemples concrets de sa réalisation témoignant de la réalisation du procédé proposé et à l'aide d'un dessin proposé représentant un schéma synoptique d'un dispositif de soudage par résistance en bout par approches successives d'une paire de pièces, selon l'invention.

Meilleure manière de réaliser l'invention L'essentiel du procédé de soudage par résistance en bout par approches successives d'une paire de pièces consiste en ce qui suit. Après la mise d'une paire de pièces à souder dans une machine à souder et le branchement de la tension de soudage, les pièces à souder s'approchent l'une de l'autre, entre les faces en bout des pièces à souder il se forme des points de contact, un courant de soudage commence à circuler dans le circuit de soudage qu'on mesure et qu'on compare à la valeur de consigne de courant d'arrêt. On choisit la valeur de courant d'arrêt égale au courant correspondant à l'extrémum de la puissance électrique dégagée dans l'interstice de soudage lors de l'étincelage. Lorsque la valeur courante du courant de soudage devient égale à celle de consigne de courant d'arrêt, on effectue l'arrêt des pièces à souder et on leur communique un mouvement oscillatoire. Ces déplacements oscillatoires, provoquent la fusion relativement continue des points de contact entre les pièces à souder qui est caractérisée par des pertes de métal à l'étincelage inférieures à celles ayant lieu lors du soudage selon le procédé constituant l'antérieurité la plus proche de la présente invention, et donc, par un efficacité accrue du chauffage des pièces à souder. Le résultat en est aussi une décroissance progressive, sans bonds, de la conductibilité de l'interstice, d'étincelage, c'est-à-dire que la stabilité de l'étincelage augmente. La décroissance progressive de l'électroconductibilité de l'interstice d'étincelage permet, lors de l'étincelage, de rendre plus durable l'état du système correspondant à l'extrémum de la puissance électrique dégagée dans l'interstice lors de l'étincelage. Dans ces conditions, en fonction de l'amplitude choisie des déplacements oscillatoires des pièces à souder, la valeur courante du courant de soudage oscille dans le domaine du courant d'arrêt.

A mesure de la fusion des points de contact formés au début de l'arrêt, la valeur courante du courant de soudage décroît progressivement jusqu'à atteindre la consigne de courant de soudage de reprise du déplacement. A ce moment, on arrête les déplacements oscillatoires des pièces à souder et on fait ces dernières reprendre le déplacement de translation jusqu'à ce que le courant de soudage atteinte de nouveau sa valeur de consigne d'arrêt, après quoi le cycle décrit ci-dessus se répète plusieurs fois jusqu'à atteindre le degré d'échauffement requis des pièces à souder.

Le moment d'atteinte de l'échauffement requis des pièces est déterminé par n'importe quelle méthode connue, par exemple, d'après le temps d'étincelage de la paire de pièces à souder.

Après l'atteinte de l'échauffement requis des faces en bout des pièces à souder, on effectue leur refoulement qui a pour résultat la formation d'une soudure.

La gamme de fréquences des déplacements oscillatoires se situant dans les limites de 10 à 50 Hz est choisie par expérience ainsi qu'à base de connaissances théoriques sur la dinamyque de détérioration des points de contact entre les faces en bout des pièces à souder lors de l'étincelage. Dans le cas où on communique aux pièces à souder des oscillations à une fréquence inférieure à 10 Hz, il y a le risque d'explosions prématurées des points de contact et donc, d'interruption du courant de soudage, ce qui abaisse l'efficacité de chauffage. En cas où les oscillations communiquées aux pièces à souder sont supérieures à 50 Hz, les points de contact, au contraire, n'ont pas le temps de fondre et de s'étaler sur la surface en bout de la pièce à souder, ce qui baisse l'efficacité de l'étincelage de la paire de pièces à souder.

Dans le procédé de soudage par résistance en bout par approches successives d'une paire de pièces, on communique aux pièces à souder, lors de leur arrêt, des oscillations avec la même amplitude de leurs écartements et de leurs rapprochements. Cela permet de prolonger à une certaine mesure la durée de la phase d'étincelage correspondant à l'extrémum de la puissance électrique dégagée dans l'interstice d'étincelage lors de l'étincelage. Le fait de communiquer à la paire de pièces à souder les déplacements oscillatoires avec les mêmes amplitudes de rapprochement et d'écartement permet de faire varier l'électroconductibilité de la même valeur dans le sens de diminution de cette dernière-, tout comme dans le sens de son accroissement dans la zone du point d'extrémum de la puissance électrique dégagée dans l'interstice lors de l'étincelage.

Selon le procédé de soudage par résistance en bout par approches successives d'une paire de pièces, on communique aux pièces à souder, lors de leur arrêt, des déplacements oscillatoires de manière à maintenir le courant de soudage dans les limites de 0,8 à 1,2 fois le courant d'arrêt. Cela aussi permet de prolonger la phase d'étincelage correspondant à l'extrémum de la puissance électrique dégagée dans l'interstice d'étincelage lors de l'étincelage, car dans ce cas il y est réalisé une commande directe de l'électroconductibilité de l'interstice d'étincelage lors de déplacements oscillatoires c'est-à-dire que l'électronductibilité est maintenue dans les limites prescrites déterminées par le courant de soudage parcourant les pièces à souder. Dans ce cas, on choisit l'amplitude de référence des déplacements oscillatoires au préalable, par expériences. En résultat, la stabilité de l'étincelage et ses indices énergétiques sont accrues.

Lorsque le courant de soudage sort au-delà de la gamme indiquée ci-dessus, il apparaît le risque d'interruptions de la circulation du courant de soudage pendant la période d'écartement et de court-circuits de courte durée entre les faces en bout des pièces à souder, ainsi que pendant les périodes de leurs rapprochements l'une de l'autre.

Selon le procédé de soudage par résistance en bout par approches successives, quand on communique aux pièces à souder des déplacements oscillatoires, on assure au moment initial la réalisation d'une période d'écartement des pièces. Le commencement des déplacements oscillatoires des pièces à souder par l'écartement de ces dernières mène au fait, que les points de contact formés vers le moment d'arrêt, pendant cette période d'écartement, sont soumis à l'extension, leur section diminue et le chauffage de ces points de contact se produit de préférence en phase liquide. Dans ce cas, la plus grande partie de la chaleur se dégage directement aux faces en bout des pièces à souder et il se trouve facilitée l'étincelage suivant lors des déplacements oscillatoires des pièces à souder. En résultat, la stabilité de l'étincelage croît.

Le dispositif mettant en oeuvre le procédé de soudage par résistance en bout par approches successives d'une paire de pièces comporte des pièces à souder 1, 2, une colonne 3 fixées rigidement à un bâti 4 par l'intermédiaire d'une garniture isolante 5, une colonne 6 montée au bâti 4 avec possibilité d'un déplacement rectiligne alternatif suivant l'axe longitudinal des pièces à souder 1, 2 coïncidant avec les directions indiquées par les flèches A. Les colonnes 3, 0 servent à tenir les pièces à souder 1, 2. Le dispositif comporte aussi, fixé au bâti 4, un cylindre hydraulique 7 d'étincelage et de refoulement avec des cavités 8, 9, le piston 10 duquel est rendu solidaire de la colonne 6. Le cylindre hydraulique 7 d'étincelage et de refoulement est destiné à communiquer aux pièces à souder 1, 2 des déplacements de va-et-vient et oscillatoires.

Le dispositif comporte un transformateur de soudage 11, l'enroulement primaire duquel 12 est connecté à une source d'alimentation électrique 13, et son enroulement secondaire 14 est connecté aux pièces à souder 1, 2 et forme avec elles un circuit de soudage.

Le bâti 4 fait partie de la machine à souder et sert à recevoir ses ensembles qui y sont montés. La garniture isolante 5 sert à prevenir le passage du courant par le bâti 4.

Le transformateur de soudage 11 sert à transformer la tension de la source d'alimentation 13 en tension de soudage.

Le dispositif en question comporte, de plus, un transformateur de courant 15 situé sur le circuit électri que de l'enroulement primaire 12 du transformateur de soudage 11. Le transformateur de courant 15 est destiné à mesurer la valeur courante du courant circulant dans le primaire 12 du transformateur de soudage 11.

Le dispositif comporte une unité de comparaison 16 d'une structure connue, destinée à comparer le signal proportionnel à la valeur de courant de soudage avec un signal de référence. Les entrées 17 de l'unité de comparaison 16 sont raccordées au transformateur de courant 15, et son entrée 18 est raccordée à une unité de consigne 19 qui est une unité de sources de tension de référence.

Le dispositif pour le soudage par résistance en bout par approches successives d'une paire de pièces comporte une unité de commande 20 formateur des commandes de commencement de l'arrêt de la paire de pièces à souder et de communication à celles-ci de déplacements oscillatoires, cette unité de commande 20 étant réalisée à base d'une bascule de Schmidt et ayant une entrée 21 raccordée à la sortie de l'unité de comparaison 16, une unité de commutation 22 servant à la commutation du signal de réaction proportionnel à la valeur courante du courant de soudage et ayant une structure connue, cette unité de commutation 22 ayant une entrée 23, raccordée à la sortie de l'unité de commande 20 et une entrée 24 raccordée à la sortie de l'unité de comparaison 16, une unité de consigne 25 servant à la formation d'un signal proportionnel au courant de reprise des déplacements, et ayant une structure connue, à base d'une potentiomètre, et ayant une sortie raccordée à une entrée 26 de l'unité de commande 20, une unité de commande 27, destinée à amplifier le signal en puissance et à former des signaux de commande et ayant une entrée 28 raccordée à la sortie de l'unité de commutation 22, un dispositif de commande d'oscillations 29 destiné à générer les oscillations de signaux électriques et possédant une structure connue se basant sur un générateur d'oscillations électriques, l'entrée 30 duquel est raccordée à la sortie de l'unité de commande 20, un amplificateur électro-hydraulique 31 destiné à commander le fonctionnement du cylindre hydraulique 7 d'étincelage et de refoulement en proportion avec le signal électrique d'entrée et ayant une entrée 32 raccordée à la sortie de l'unité de commande 27 et une entrée 33 raccordée à la sortie du dispositif de commande d'oscillations 29, une station d'huile 34 destinée à amener sous pression un liquide moteur et à recevoir le liquide moteur usé. La station d'huile 34 est reliée à l'amplificateur électro-hydraulique 31 par l'intermédiaire de tuyauteries 35 et 36, l'amplificateur électro--hydraulique 31 étant raccordé, par l'intermédiaire de tuyauteries 37 et 38, aux cavités 8, 9 du cylindre hydraulique, respectivement.

Le dispositif mettant en oeuvre le procédé de soudage par résistance en bout par approches successives d'une paire de pièces fonctionne comme suit. Avant de commencer le soudage, on place une paire de pièces à souder 1, 2 dans les colonnes 3, 6 de la machine à souder. A l'aide de l'unité de consigne 19, on établit un signal de référence proportionnel au courant d'arrêt et à l'aide de l'unité de consigne 25 on préétablit un signal de référence proportionnel au courant de reprise du déplacement des pièces.

Lorsqu'on applique la tension de soudage, et en présence d'un interstice entre les pièces à souder 1, 2, le courant dans le circuit de soudage est absent. Les pièces à souder commencent à se rapprocher l'une de l'autre à une vitesse constante déterminée par le signal de référence arrivant de l'unité de consigne 19 à l'entrée 18 de l'unité de comparaison 16. Ensuite, le signal est appliqué à l'entrée 24 de l'unité de commutation 22, de la sortie de l'unité de commutation 22, le signal va à l'entrée 28 de l'unité de commande 27. L'unité de commande 27 fournit par sa sortie le signal amplifié de commande à l'entrée 32 de l'amplificateur hydro-électrique 31 qui effectue l'amenée du liquide moteur par la tuyauterie 38 à la cavité 9 du cylindre hydraulique 7 d'étincelage et de refoulement.

Lorsque le courant de soudage apparaît entre les pièces à souder apparaissent des points de contact et commence à circuler dans le circuit de soudage formé par le secondaire 14 du transformateur de soudage 11 et les pièces à souder 1, 2. La valeur courante du courant de soudage est mesurée par le transformateur de courant 15 et est appliquée aux entrées 17 de l'unité de comparaison 16. Dans l'unité de comparaison 16, le signal de référence fourni par l'unité de consigne 19 est comparé avec le signal proportionnel à la valeur courante du courant de soudage mesurée par le transformateur de courant 15 et à mesure que la valeur courante de courant de soudage croît, le signal résultant passant par l'unité de commutation 22 à l'entrée 28 de l'unité de commande 27 décroît et, donc, diminue la vitesse du déplacement de translation réciproque des pièces à souder 1,2. Aussi, dans l'unité de comparaison 16 le signal proportionnel est additionnée à la valeur courante de courant de soudage au signal de référence arrivant de l'unité de consigne 19 et le signal résultant est fourni par la sortie de l'unité de comparaison 16 à l'entrée 21 de l'unité de commande 20.

Lorsque le courant de soudage a atteint sa valeur d'arrêt, l'unité de commande 20 fonctionne. La première sortie de l'unité de commande 20 fournit un signal mettant en marche le dispositif de commande d'oscillations 29 ce signal étant reçu par l'entrée 30 de ce dernier à l'entrée 23 de l'unité de commutation 22 en débranchant cette dernière, la deuxième sortie de l'unité de commande 20 fournit un signal. L'unité de comparaison cesse alors de fournir le signal résultant à l'entrée 28 de l'unité de commande 27 et les pièces à souder 1, 2 s'arrêtent. Simultanément, le dispositif de commande d'oscillations 29 est mis en marche et les signaux électriques de commande oscillatoires s'appliquent à l'entrée 33 de l'amplificateur électro-hydraulique 31. A l'aide de l'amplificateur électro-hydraulique 31 le liquide moteur est amené alternativement par les tuyauteries 37, 38 aux cavités, respectivement, 8 et 9 du cylindre hydraulique 7 d'étincelage et de refoulement. Ainsi, des déplacements oscillatoires sont transmises aux pièces à souder 1, 2.

Grâce au fait de communiquer aux pièces à souder 1,2 des déplacements oscillatoires dans l'intervalle de leur arrêt la phase d'étincelage de ces pièces se trouve prolongée dans les conditions caractérisées par un courant des soudadage correspondant à l'extrémum de la courbe de puissance utile c'est-à-dire que le courant de soudage se stabilise. Après l'arrêt des pièces à souder et la transmission de déplacements oscillatoires à celles-ci, il se produit la fusion des points de contact formés et la diminution de leur section totale, ce qui entraîne la décroissance du courant de soudage. Lorsque la valeur courante de courant de soudage baisse en devenant égale à la valeur de reprise des déplacements fournie par l'unité de consigne 25, il se produit la mise de l'unité de commande 20 à l'état initial. Alors le dispositif de commande d'oscillations 29 se met au répos, l'unité de commutation 22 se remet à l'état initial et le déplacement de translation réciproque des pièces à souder 1,2 recommence. Lorsque la valeur courante de courant de soudage croît de nouveau jusqu' à la valeur de courant d'arrêt, le cycle décrit de fonctionnement du dispositif se répète. En chauffant les pièces à souder jusqu' au degré d'échauffement requis, on effectue leur refoulement, en résultat de quoi il se forme une soudure.

Ainsi, l'invention permet d'augmenter les indices énergétiques de l'étincelage et de ce fait, d'augmenter la cadence du soudage.


Exemple


On soudait des pièces en acier ayant une section en cercle d'un diamètre de 110 mm.

On effectuait le refoulement des pièces à souder après les avoir chauffées jusqu' au degré d'échauffement requis.

La tension à l'enroulement secondaire du transformateur de soudage faisait 6,8 V. Un premier lot de paires de pièces était soudé en utilisent le procédé de soudage par résistance en bout par approches successives constituant l'antériorité la plus proche de l'invention, c'est-à-dire pendant l'étincelage des pièces à souder on effectuait des arrêts de ces dernières lorsque le courant de soudage devenait égale à sa valeur d'arrêt correspondant à l'extrémum de la puissance électrique dégagée dans le joint à souder lors de l'étincelage.

Pour le type et les dimensions donnés des pièces à souder, et pour ladite tension de soudage de 6,8 Y, le courant auquel on faisait s'arrêter les pièces à souder faisait 28000 A.

La durée moyenne de soudage pour les pièces du premier lot était égale à 160 s.

Les lots suivants de paires de pièces à souder on été soudés en utilisant le procédé proposé de soudage par résistance en bout par approches successives, c'est--à-dire pendant l'étincelage des pièces à souder, on les faisait s'arrêter et pendant ces arrêts on communiquait aux pièces à souder des mouvements oscillatoires. On arrêtait les pièces a souder lorsque le courant de soudage devenait égal à 28000 A. On faisait les pièces à souder reprendre leurs déplacements de translation lorsuq le courant de soudage s'abaissait jusqu' à la valeur de 19600 A. La fréquence des mouvements oscillatoires exercés pendant l'arrêt des déplacements de translation des pièces à souder était égale à 25 Hz.

La durée moyenne du soudage pour ce lot de paires de pièces à souder faisait 120 s.

Aux pièces à souder du lot suivant on communiquait, pendant l'interruption de leurs déplacements de translation, des oscillations à une fréquence de 10 Hz. La durée de soudage était alors de 130 s.

Les pièces à souder du lot suivant étaient mises en oscillations, lors de l'interruption de leurs déplacements de translation, à une fréquence inférieure à celle de l'exemple précédent ce qui provoquait une augmentation sensible de la durée de soudage qui était devenu égale à 150 s.

Les pièces à souder d'un lot suivant, pendant l'interruption de leurs déplacements de translation, étaient mises en oscillations à une fréquence égale à 50 Hz. La durée de soudage était alors égale à 135 s.

L'augmentation plus poussée de la fréquence a provoqué une augmentation sensible de la durée de soudage qui était devenu égale à 155 s.

Ainsi, la variation de la fréquence des mouvements oscillatoires des pièces à souder lors de l'interruption de leurs déplacements de translation la faisant sortir desdites limites n'entraîne pas l'augmentation de la cadence du soudage.

L'utilisation du procédé proposé de soudage par résistance en bout par approches successives d'une paire de pièces donne une augmentation du rendement du soudage de 25%. `

Encore un lot de paires de pièces à souder a été soudé selon le procédé conforme à la revendication 2 de l'invention proposée. Dans ce cas, l'amplitude de rapprochement des pièces à souder entre elles et de leur écartement lors de leurs mouvements oscillatoires faisait 0,5 mm, toutes les autres conditions étant les mêmes. La durée de soudage était de 115 s environ, ce qui témoigne d'une certaine augmentation de la cadence de soudage.

Le lot suivant de paires de pièces à souder a été soudé selon le procédé faisant l'objet de la revendication 3 de la demande pour la présente invention. Dans ce cas, avant le commencement du soudage, l'amplitude des déplacements oscillatoires a été choisie de telle façon qu'aux moments initiaux des intervalles d'arrêt, lorsque on communiquait aux pièces à souder des mouvements oscillatoires, la valeur courante de courant de soudage variait dans les limites de $28000 \cdot 0,8 = 22400$ A pendant la période d'écartement des pièces à $28000 \cdot 1,2 = = 33600$ A pendant la période de rapprochement des pièces entre elles. On n'avait pas observé d'interruptions du courant de soudage ni de court-circuits entre les faces en bout des pièces, le temps de soudage faisant 110 s environ.

Lorsqu'on élargissait la plage de variation de la valeur courante du courant de soudage notamment de $28000 \cdot 0,7 = 19600$ A, pendant l'écartement, à $28000 \cdot 1,3 = 36400$ A, pendant le rapprochement, la durée de soudage avait augmenté jusqu' à 125 s.

Encore un lot de paires de pièces était soudé selon le procede de la revendication 4 de la demande pour l'invention proposée. On avait constaté que si les oscillations de mouvements oscillatoires de la paire de pièces à souder avait été commencé par l'écartement des pièces à souder, on obtient une certaine amélioration de la stabilité de l'étincelage grâce à ce qu'il n'y avait pas de risque de court-circuits aux moments de commencement des déplacements oscillatoires. La durée de soudage dans ce cas faisait 115 s environ, ce qui témoignait d'une certaine augmentation de la cadence du soudage par rapport au procédé selon la revendication 1.

De ce qu'on vient de décrire, on peut conclure que l'application de la présente invention permet d'augmenter les indices énergétiques de l'étincelage et la stabilité de ce dernier, ce qui avait pour résultat l'augmentation du rendement du soudage en moyenne de 25 à de 30%.

Applicabilité industrielle

L'invention peut être appliquée aux machines pour le soudage par résistance en bout par approches successives équipées d'une commande rapide de l'étincelage, pour le soudage de rails de lurdes séries, de tubes de grands diamètres et de tous types de laminés ayant de grandes sections transversales.

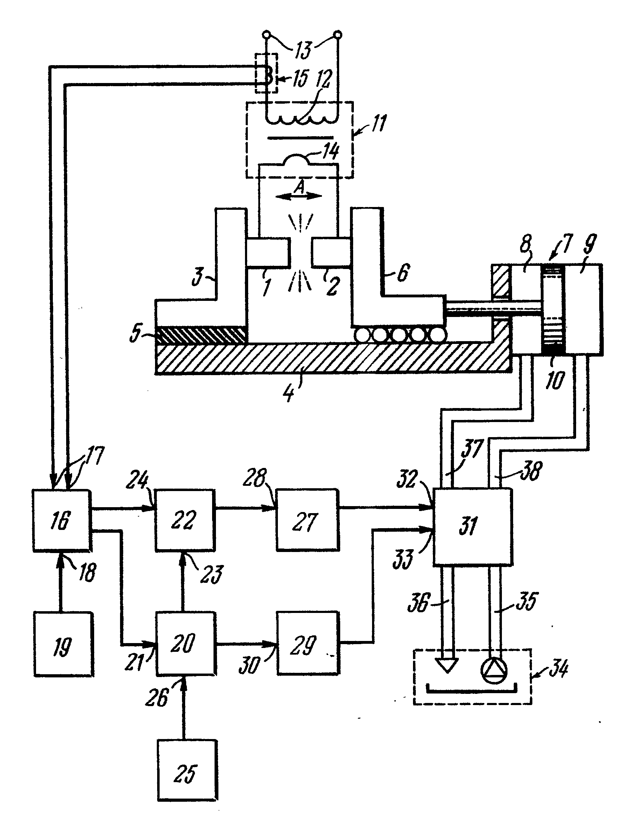

**Revendications**

1. Procédé de soudage par résistance en bout à approches successives consistant en ce qu'on installe une paire de pièces (1,2) dans une machine à souder avec possibilité d'un déplacement rectiligne alternatif, on prédétermine la valeur d'arrêt du courant de soudage à laquelle on doit arrêter le déplacement des pièces à souder (1,2), on prédétermine la valeur de courant de soudage de recommencement du déplacement à laquelle on doit recommencer le déplacement rectiligne des pièces à souder (1,2) après leurs arrêt, on applique aux pièces à souder (1,2) la tension de soudage pour effectuer leur étincelage lors de leur déplacement rectiligne réciproque, on mesure la valeur courante du courant de soudage lors de l'étincelage des pièces à souder (1,2), on effectue l'arrêt des pièces à souder (1, 2) lorsque le courant de soudage mesuré atteint sa valeur d'arrêt, on recommence le déplacement rectiligne réciproque des pièces à souder (1,2) lorsque le courant de soudage baisse jusqu'à sa valeur de recommencement du déplacement, on effectue le refoulement des pièces à souder (1,2) après qu'elles sont été portées à la température requise, **caractérisé** en ce qu'à l'arrêt de la paire de pièces à souder (1,2) on leur communique un mouvement oscillatoire à une fréquence d'oscillations se situant dans la plaque entre 10 et 50 Hz.

2. Procédé de soudage électrique par résistance en bout à approches successives d'une paire de pièces (1,2) selon la revendication 1, **caractérisé** en ce qu'on communique les déplacements oscillatoires en respectant les amplitudes identiques d'approche et d'écartement des pièces à souder (1,2).

3. Procédé de soudage électrique par résistance en bout à approches successives selon la revendica tion 1, **caractérisé** en ce que lors des déplacements oscillatoires de la paire de pièces a souder (1,2), la valeur courante du courant de soudage est maintenue dans les limites de 0,8 à 1,2 fois la valeur de courant d'arrêt.

4. Procédé de soudage électrique par résistance en bout à approches successives d'une paire de pièces (1,2) selon l'une quelconque des revendications 1 & 3, **caractérisé** en ce qu'on commence les déplacements oscillatoires des pièces à souder par leur écartement.

# INTERNATIONAL SEARCH REPORT

International Application No PCT/SU 89/00053

| I. CLASSIFICATION OF SUBJECT MATTER (if several classification symbols apply, indicate all) [6] |
|---|
| According to International Patent Classification (IPC) or to both National Classification and IPC |
| Int. Cl.[5] B 23 K 11/04 |

## II. FIELDS SEARCHED

| Minimum Documentation Searched [7] | |
|---|---|
| Classification System | Classification Symbols |
| Int. Cl.[4] | B 23 K 11/00, 11/04, 11/12 |

| Documentation Searched other than Minimum Documentation<br>to the Extent that such Documents are Included in the Fields Searched [8] |
|---|
| |

## III. DOCUMENTS CONSIDERED TO BE RELEVANT [9]

| Category [6] | Citation of Document, [11] with indication, where appropriate, of the relevant passages [12] | Relevant to Claim No. [13] |
|---|---|---|
| A | SU, A1, 903026 (Spetsialnoe konstruktorskoe bjuro Pskovskogo zavoda tyazhelogo elektrosvarochnogo oborudovania), 7 February 1982 (07.02.82), (cited in the description)<br>-- | 1-4 |
| A | FR, A1, 2490983 (INSTITUT ELEKTROSVARKI IMENI E.O. PATONA AKADEMII NAUK UKRAINSKOI SSR), 2 April 1982 (02.04.82), see the claims<br>-- | 1-4 |
| A | FR, A1, 2448958 (INSTITUT ELEKTROSVARKI IMENI E.O. PATONA AKADEMII NAUK UKRAINSKOI SSR), 12 September 1980 (12.09.80) | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 12 September 1989 (12.09.89) | 27 October 1989 (27.10.89) |
| International Searching Authority | Signature of Authorized Officer |
| ISA/SU | |

Form PCT/ISA/210 (second sheet) (January 1985)